(19) Europäisches Patentamt
European Patent Office
Office européen des brevets

(11) **EP 2 850 389 B1**

(12) **FASCICULE DE BREVET EUROPEEN**

(45) Date de publication et mention
de la délivrance du brevet:
**23.03.2016 Bulletin 2016/12**

(21) Numéro de dépôt: **13727296.9**

(22) Date de dépôt: **15.05.2013**

(51) Int Cl.:
***G01C 19/72*** *(2006.01)*

(86) Numéro de dépôt international:
**PCT/FR2013/051060**

(87) Numéro de publication internationale:
**WO 2013/171428 (21.11.2013 Gazette 2013/47)**

(54) **SYSTÈME DE MESURE INTERFÉROMÉTRIQUE À FIBRE OPTIQUE ET SYSTÈME INERTIEL DE GUIDAGE OU DE NAVIGATION COMPRENANT UN TEL SYSTÈME DE MESURE INTERFÉROMÉTRIQUE**

INTERFEROMETRISCHES MESSSYSTEM MIT OPTISCHER FASER UND INERTIALFÜHRUNGS- ODER NAVIGATIONSSYSTEM MIT EINEM SOLCHEN INTERFEROMETRISCHEN MESSSYSTEM

INTERFEROMETRIC MEASUREMENT SYSTEM WITH OPTICAL FIBRE AND INERTIAL GUIDANCE OR NAVIGATION SYSTEM INCLUDING SUCH AN INTERFEROMETRIC MEASUREMENT SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.05.2012 FR 1254523**

(43) Date de publication de la demande:
**25.03.2015 Bulletin 2015/13**

(73) Titulaire: **IXBLUE**
**78100 Saint-Germain-en-Laye (FR)**

(72) Inventeurs:
• **GUATTARI, Frédéric**
**F-93300 Aubervilliers (FR)**
• **MOLUCON, Cédric**
**F-75007 Paris (FR)**
• **DUCLOUX, Eric**
**F-92500 Rueil Malmaison (FR)**

(74) Mandataire: **Coralis Harle**
**14-16 Rue Ballu**
**75009 Paris (FR)**

(56) Documents cités:
**US-A- 5 157 461       US-A- 5 854 678**
**US-A- 6 163 632**

# Description

Le domaine de la présente divulgation est celui des interféromètres en anneau à fibre optique. Plus précisément, l'invention concerne un système de mesure interférométrique basé sur une pluralité d'interféromètres en anneau à fibre optique. Une application particulière d'un tel système concerne un dispositif utilisant plusieurs gyroscopes à fibre optique (dit FOG pour fiber optic gyroscope) pour des mesures de rotation suivant plusieurs axes.

De manière connue, un FOG repose sur un interféromètre en anneau de Sagnac en configuration réciproque, l'anneau étant formé par une bobine de fibre optique. Un gyroscope à fibre optique comporte généralement une source à spectre large, un premier séparateur de faisceau (dit séparateur source-détecteur), un filtre monomode spatial et en polarisation en entrée-sortie commune de l'interféromètre, un deuxième séparateur (dit séparateur de bobine), une bobine de fibre optique et un détecteur.

Dans le présent document, on entend par source à spectre large, une source lumineuse ayant une longueur de cohérence inférieure au millimètre.

En configuration réciproque, après être passé par le polariseur et le filtre spatial, le faisceau lumineux incident est divisé pour produire deux faisceaux secondaires. Les deux faisceaux secondaires, polarisés linéairement à l'entrée, se propagent en sens opposés le long d'un chemin optique fermé, se recombinent et produisent des interférences qui dépendent du déphasage des faisceaux lors de leur recombinaison. Au repos, les chemins optiques sont parfaitement réciproques, les déphasages induits dans le sens propagatif et dans le sens contrapropagatif s'annulent.

Il est connu qu'un interféromètre en anneau de Sagnac est sensible aux phénomènes physiques susceptibles de produire des déphasages non réciproques. Parmi les principaux phénomènes physiques, la rotation d'un interféromètre en anneau de Sagnac, par rapport à un axe perpendiculaire à la surface de l'anneau, induit un déphasage proportionnel à la vitesse de rotation $\Omega$. De cette propriété, appelée effet Sagnac, découle la principale application d'un interféromètre en anneau de Sagnac à un gyroscope pour mesurer une vitesse de rotation. Du fait de leur stabilité, leur fiabilité et leur compacité, les gyroscopes à fibre optique sont de plus en plus utilisés pour la mesure de rotation dans les systèmes inertiels de guidage ou de navigation.

D'autres phénomènes physiques, tels que l'effet magnéto-optique de Faraday, sont aussi susceptibles d'induire des déphasages non-réciproques.

Toutefois, certains phénomènes produisent des effets susceptibles de perturber la précision, la sensibilité et la stabilité temporelle d'un gyroscope à fibre optique. Ainsi, des effets de polarisation dans les fibres peuvent induire des déphasages parasites à l'origine d'erreurs de biais. L'utilisation d'une source à spectre large, d'un polariseur d'entrée-sortie commune à fort taux d'extinction et d'une fibre optique à conservation de polarisation dans la bobine de fibre optique est préconisée afin de limiter les erreurs de biais d'un FOG (H.C. Lefèvre, J.P. Bettini, S. Vatoux and M. Papuchon, « Progress in optical fiber gyroscopes using integrated optics », Agard/Nato Conférence on Guided Optical Structures in the Military Environment, AGARD CPP-383, 9A/1-13, 1985).

D'autre part, un système inertiel de guidage ou de navigation comporte généralement un système de trois gyroscopes afin de mesurer les rotations autour de trois axes d'un repère dans l'espace, les axes des trois bobines de fibres formant les axes du repère. Notons que dans certains cas, pour des besoins de redondance, plus de trois axes peuvent être utilisés.

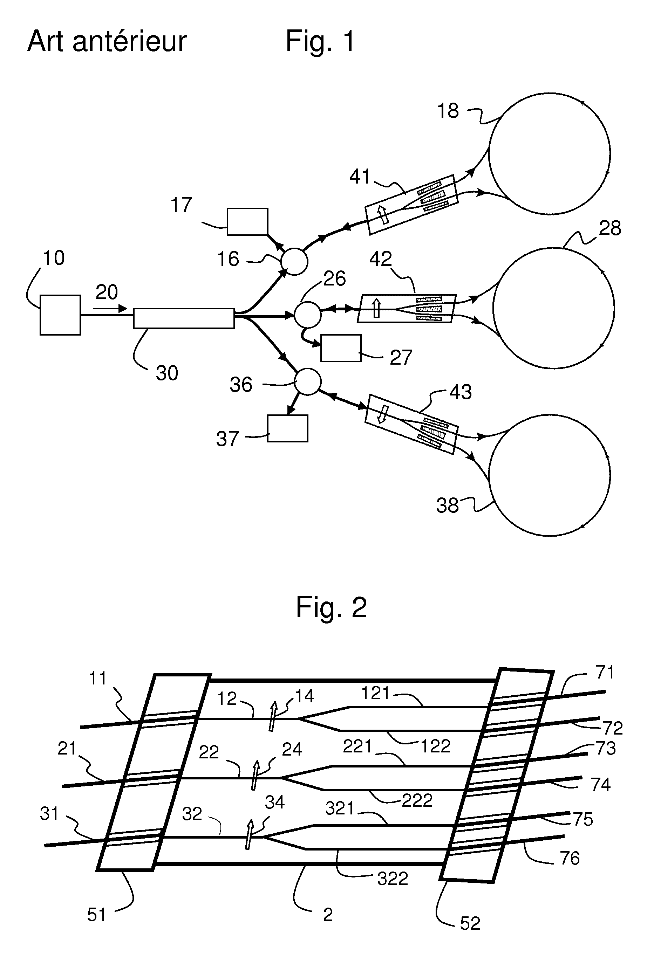

Dans de tels systèmes, pour des raisons de compacité, de coût et de stabilité, les technologies optiques en milieu solide sont privilégiées. Ainsi, les FOGs mettent en oeuvre les technologies de source à émission spontanée amplifiée par émission stimulée ou source ASE (Amplified Spontaneous Emission) à fibre optique amplificatrice dopée terre rare, ou de diode superluminescente à semiconducteurs, de fibre optique (pour la bobine) et de circuit optique intégré (COI) multifonction (polariseur, séparateur de faisceau, modulateurs de phase). La figure 1 représente un système à trois FOGs comportant une seule source lumineuse 10 et trois interféromètres. La source 10 génère un faisceau lumineux 20. Un premier diviseur de faisceau 30 sépare le faisceau 20 en trois faisceaux divisés. Le diviseur de faisceau 30 est par exemple un coupleur 1 x3 à fibre optique. Chaque interféromètre comporte une bobine de fibre optique 18, respectivement 28, 38 et un circuit optique intégré 41, respectivement 42, 43. Les circuits optiques intégrés 41, 42, 43 permettent de réaliser plusieurs fonctions intégrées sur un même substrat. Ces circuits permettent d'augmenter la compacité du dispositif et de réduire les coûts de fabrication. Typiquement, chaque circuit optique intégré 41, 42, 43 comporte un guide d'onde monomode en entrée, un séparateur de bobine par exemple une jonction Y, une connexion d'entrée vers la source et vers un détecteur, et deux connexions vers les extrémités de la bobine de fibre. Avantageusement, chaque circuit optique intégré sert de polariseur et comporte des moyens de modulation du signal. La source lumineuse 10 est reliée par fibres optiques monomodes à chaque circuit optique intégré. Chaque bobine de fibre 18, respectivement 28, 38 est reliée à un circuit optique intégré indépendant sur des substrats différents (cf Figure 1).

Pour des questions de compacité et de coût, il est souhaitable de remplacer les différents circuits optiques intégrés indépendants du dispositif de la figure 1 par un circuit optique intégré multiple formé par l'intégration de plusieurs COI individuels sur un seul substrat. Un circuit optique intégré multiple peut ainsi avantageusement être relié d'une part à une seule et même source et d'autre part à différents interféromètres en anneau de Sagnac à fibre optique. De plus, l'utilisation d'un peigne de fibres (multi-fibre array) est connue pour simplifier l'alignement entre les extrémités de fibres optiques et de guides d'onde d'un circuit optique intégré multiple. Un peigne de fibre est généralement constitué d'un substrat planaire comportant des rainures en forme de V espacées régulièrement de manière à positionner précisément les extrémités de différentes fibres optiques suivant une même ligne et à permettre un couplage collectif.

La figure 2 représente en vue de dessus un circuit optique intégré multiple relié à des peignes de fibres optiques en entrée et en sortie. A titre d'exemple, le circuit optique intégré multiple comporte trois circuits optiques intégrés individuels disposés en parallèle sur le même substrat 2. Dans l'exemple représenté, chaque circuit optique intégré individuel comporte un séparateur de bobine, de type jonction Y ayant un tronc commun 12 (respectivement 22, 32) et deux branches 121 et 122 (respectivement 221, 222 et 321, 322). Un premier peigne de fibre 51 permet d'aligner et de maintenir des fibres optiques 11, respectivement 21, 31 face aux extrémités des troncs communs 12, respectivement 22, 32. Un deuxième peigne de fibre 52 permet d'aligner et de maintenir les fibres optiques 71, 72, 73, 74, 75, 76 face aux extrémités opposées des différentes branches des guides d'onde respectivement 121, 122, 221, 222, 321, 322. Un faisceau se propageant sur la fibre optique 11 est couplé dans le guide d'onde 12 puis divisé par la jonction Y en deux faisceaux secondaires se propageant séparément jusqu'aux extrémités 121 et 122 du guide d'onde. Les faisceaux secondaires sont couplés aux extrémités des fibres optiques 71 et 72.

En outre, un circuit optique intégré permet d'intégrer d'autres fonctions sur le même substrat : polarisation des faisceaux, modulations... De façon avantageuse, les troncs communs 12, 22, 32 comportent des guides d'onde polarisants 14, 24, 34 intégrés sur un substrat 2 de niobate de lithium. Des modulateurs de phase électro-optiques peuvent être disposés de part et d'autre des branches 121, 122 (respectivement 221, 222 et 321, 322) pour moduler la phase des signaux interférométriques.

Toutefois, en pratique, l'utilisation d'un circuit optique intégré multiple dans un système de plusieurs gyroscopes à fibres optiques pose des problèmes de couplages parasites entre les différentes fibres connectées et donc entre les différents interféromètres. Si ces couplages parasites sont cohérents, ceci peut induire des défauts de biais instables. De plus, il faut éviter que les différents interféromètres soient en cohérence. De préférence, une seule et même source lumineuse est utilisée pour les différents interféromètres. La source utilisée est généralement une source à spectre large, ayant une longueur de cohérence de quelques dizaines de microns (pour une diode superluminescente) à plusieurs centaines de microns (pour une source ASE). Il est connu qu'une source à spectre large peut être considérée comme émettant des trains d'onde qui ont pour longueur la longueur de cohérence de la source. Or, en pratique, les longueurs des différents chemins optiques ne sont pas égales à cette dizaine ou centaine de microns près. Une différence de longueur de plusieurs millimètres suffit a priori pour éliminer les phénomènes de couplage cohérents entre les différents interféromètres.

Les phénomènes physiques à l'origine des couplages parasites dans un COI multiple peuvent être variés et sont généralement complexes : couplage d'une partie de l'onde incidence via le substrat entre les extrémités de fibres optiques sur les faces opposées du substrat ou au niveau d'une jonction Y, réflexions internes multiples dans le substrat...

Différentes solutions ont été envisagées pour réduire les couplages parasites dans un circuit optique intégré. Ainsi le document de brevet US 5,321,779 propose la formation de rainures sur les faces inférieure et supérieure d'un COI dans le but d'atténuer des réflexions internes parasites.

Toutefois, même en employant de telles rainures, les performances de chaque FOG d'un système comportant un circuit optique intégré multiple sur un même substrat, restent limitées en terme de stabilité temporelle. On observe en pratique des instabilités de biais de $10^{-5}$ à $10^{-6}$ radians en déphasage.

Le brevet US 5,157,461 décrit un appareil de mesure de trois rotations angulaires comportant une source, un circuit optique intégré relié à trois bobines de fibres optiques et des moyens de commutation sélective du signal source vers l'une des trois bobines de fibre de manière à multiplexer temporellement le signal source entre les trois bobines. Ce dispositif évite ainsi toute interférence entre les signaux des différentes bobines de fibre.

La présente invention a pour but de remédier aux inconvénients des systèmes interférométriques antérieurs et concerne plus particulièrement un système de mesure interférométrique à fibre optique comportant :

- une source lumineuse à spectre large apte à émettre un faisceau lumineux source ;
- un diviseur de faisceau apte à recevoir le faisceau lumineux source et à former un premier faisceau source divisé et un deuxième faisceau source divisé ;
- des premiers moyens de transmission optique de longueur optique $\ell_1$ aptes à transmettre le premier faisceau source divisé et des deuxièmes moyens de transmission optique de longueur optique $\ell_2$ aptes à transmettre le deuxième faisceau source divisé ;
- un premier interféromètre en anneau de Sagnac comportant une première bobine de fibre optique et un premier circuit optique intégré individuel relié d'une part aux premiers moyens de transmission optique et d'autre part aux deux extrémités de la première bobine de fibre optique, la première bobine de fibre optique ayant une longueur $L_1$ et une différence

d'indice de biréfringence de groupe $\Delta N_{b1}$ ;

- un premier détecteur apte à détecter un premier signal interférométrique formé par la propagation du premier faisceau source divisé dans le premier interféromètre en anneau de Sagnac;

- un deuxième interféromètre en anneau de Sagnac comprenant une deuxième bobine de fibre optique et un deuxième circuit optique intégré individuel relié d'une part aux deuxièmes moyens de transmission optique et d'autre part aux deux extrémités de la deuxième bobine de fibre optique, la deuxième bobine de fibre optique ayant une longueur $L_2$ et une différence d'indice de biréfringence de groupe $\Delta N_{b2}$ ; et

- un deuxième détecteur apte à détecter un deuxième signal interférométrique formé par la propagation du deuxième faisceau source divisé dans le deuxième interféromètre en anneau de Sagnac.

Selon l'invention, le système de mesure interférométrique comporte un circuit optique intégré multiple intégrant sur un même substrat le premier circuit optique intégré individuel et le deuxième circuit optique intégré individuel, et

- la différence $\Delta \ell$ entre la longueur optique $\ell_1$ des premiers moyens de transmission optique et la longueur optique $\ell_2$ des deuxièmes moyens de transmission optique est supérieure au maximum de $\Delta N_{b1}$ x $L_1$ et $\Delta N_{b2}$ x $L_2$.

Selon différents aspects avantageux de l'invention :

- la différence $\Delta \ell$ entre la longueur optique $\ell_1$ des premiers moyens de transmission optique et la longueur optique $\ell_2$ des deuxièmes moyens de transmission optique est supérieure à quatre fois la valeur du maximum de $\Delta N_{b1}$ x $L_1$ et de $\Delta N_{b2}$ x $L_2$ ;

- les premiers moyens de transmission optique comportent une fibre optique et/ou les deuxièmes moyens de transmission optique comportent une fibre optique.

Dans un mode de réalisation préféré, la première, respectivement la deuxième bobine de fibre optique comporte une fibre optique à maintien de polarisation ayant une différence d'indice de biréfringence de groupe $\Delta N_{b1}$ respectivement $\Delta N_{b2}$, comprise entre $10^{-4}$ et $10^{-3}$ et la différence $\Delta \ell$ entre la longueur optique $\ell_1$ des premiers moyens de transmission à fibre optique et la longueur optique $\ell_2$ des deuxièmes moyens de transmission à fibre optique est comprise entre $10^{-4}$ et $10^{-3}$ multiplié par le maximum de $L_1$ et $L_2$.

Selon un mode de réalisation particulier, le système de mesure interférométrique à fibre optique comporte en outre un premier, respectivement un deuxième, séparateur source-détecteur disposé entre le diviseur de faisceau et le circuit intégré multiple, et la différence $\Delta \ell$ entre la longueur optique $\ell_1$ des premiers moyens de transmission optique et la longueur optique $\ell_2$ des deuxièmes moyens de transmission optique est située entre le diviseur de faisceau et les premier et deuxième séparateurs source-détecteur.

Selon un autre mode de réalisation particulier, le système de mesure interférométrique à fibre optique comporte en outre un premier, respectivement un deuxième, séparateur source-détecteur disposé entre le diviseur de faisceau et le circuit intégré multiple, et la différence $\Delta \ell$ entre la longueur optique $\ell_1$ des premiers moyens de transmission optique et la longueur optique $\ell_2$ des deuxièmes moyens de transmission optique est située entre le circuit intégré multiple et les premier et deuxième séparateurs source-détecteur.

Selon un mode de réalisation particulièrement avantageux, le système de mesure interférométrique à fibre optique comporte en outre des troisièmes moyens de transmission optique de longueur optique $\ell_3$ aptes à transmettre un troisième faisceau source divisé, un troisième interféromètre en anneau de Sagnac comportant une troisième bobine de fibre optique et un troisième circuit optique intégré individuel relié d'une part aux troisièmes moyens de transmission optique et d'autre part aux deux extrémités de la troisième bobine de fibre optique, la troisième bobine de fibre optique ayant une longueur $L_3$ et une différence d'indice de biréfringence de groupe $\Delta N_{b3}$, le circuit optique intégré multiple intègre sur le même substrat le premier circuit optique intégré individuel, le deuxième circuit optique intégré individuel et le troisième circuit optique intégré individuel et la différence de longueur optique entre deux quelconques des premiers, deuxièmes et troisièmes moyens de transmission optique est supérieure au maximum de $\Delta N_{b1}$ x $L_1$, $\Delta N_{b2}$ x $L_2$ et $\Delta N_{b3}$ x $L_3$.

Préférentiellement, la différence de longueur optique entre deux quelconques des premiers, deuxièmes et troisièmes moyens de transmission optique est supérieure à quatre fois la valeur du maximum de $\Delta N_{b1}$ x $L_1$, $\Delta N_{b2}$ x $L_2$ et $\Delta N_{b3}$ x $L_3$.

De façon avantageuse, la source lumineuse à spectre large est choisie parmi une diode super luminescente et une source ASE à fibre dopée terre rare.

L'invention concerne tout particulièrement un système de mesure gyroscopique comportant un système de mesure interférométrique à fibre optique selon l'un des modes de réalisation décrits, dans lequel un premier gyroscope à fibre optique comporte le premier interféromètre à fibre optique, un séparateur source-détecteur et un détecteur.

L'invention concerne aussi un système inertiel de guidage ou de navigation comprenant un système de mesure interférométrique à fibre optique selon l'un des modes de réalisation décrits.

L'invention trouvera une application particulièrement avantageuse dans les systèmes de mesure interférométriques intégrant plusieurs gyroscopes à fibre optique, notamment les systèmes inertiels de guidage ou de navigation.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- la figure 1 représente un système de trois gyroscopes à fibre optique selon l'art antérieur ;
- la figure 2 représente un substrat intégrant trois circuits optiques intégrés individuels en parallèle ;
- la figure 3 représente un système de gyroscopes à fibres optiques selon un mode de réalisation préféré de l'invention ;
- la figure 4 représente le spectre en puissance normalisée d'une source à spectre large ;
- la figure 5 représente, en échelle logarithmique, la fonction de cohérence du spectre de la figure 4 ;
- la figure 6 représente le spectre de la source de la figure 4 après passage dans l'interféromètre ;
- la figure 7 représente, en échelle logarithmique, la fonction de cohérence du spectre de la figure 6.

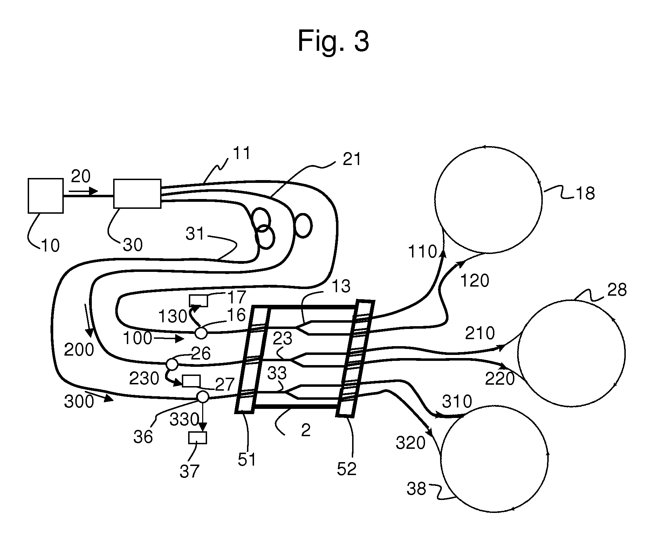

La figure 3 représente un système de mesure gyroscopique à trois gyroscopes selon un mode de réalisation préféré de l'invention.

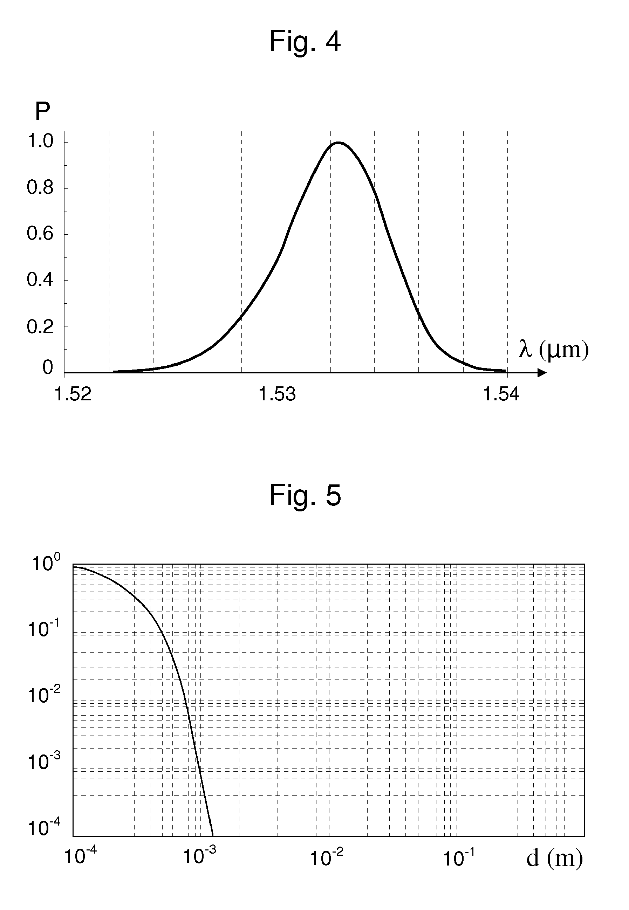

Le système de mesure gyroscopique comporte une source lumineuse 10 à spectre large, de préférence une source "ASE" (source dopée terre rare, notamment erbium ou néodyme) ou une diode superluminescente (DSL). La source lumineuse 10 à spectre large émet un faisceau lumineux source 20 située à une longueur d'onde $\lambda$. Dans le cas où la source est une source ASE dopée erbium, la longueur d'onde d'émission est autour de 1530 nm (cf exemple de la figure 4). Un diviseur de faisceau 30 sépare le faisceau lumineux source en trois faisceaux source divisés. De façon avantageuse, les premier, deuxième et troisième faisceaux source divisés 100, 200, 300 ont des puissances identiques. Le diviseur de faisceau 30 est par exemple constitué d'un composant à fibre optique, tel qu'un coupleur 1 x3 à fibre optique. Des fibres optiques 11, 21, 31 transmettent respectivement les premier, deuxième et troisième faisceaux source divisés 100, 200, 300 jusqu'à un peigne de fibre 51. Les extrémités des fibres 11, 21, 31 sont alignées respectivement face aux extrémités de différents circuits optiques intégrés individuels disposés en parallèle sur un même substrat 2.

Un premier circuit optique intégré individuel 13 est relié d'une part à une extrémité de la première fibre optique 11 et d'autre part aux deux extrémités d'une première bobine de fibre optique 18 par l'intermédiaire d'un deuxième peigne de fibre 52. Le premier circuit optique intégré individuel 13 comporte un séparateur de faisceau de manière à séparer le premier faisceau lumineux source divisé 100 en un premier faisceau secondaire 110 parcourant la première bobine de fibre optique 18 dans le sens propagatif et un deuxième faisceau secondaire 120 parcourant la première bobine de fibre optique 18 dans le sens contra-propagatif. Les deux faisceaux secondaires 110, 120 se recombinent au niveau du séparateur de faisceau du premier COI individuel 13 et forment un faisceau interférométrique 130. Un séparateur source-détecteur 16 dirige le faisceau interférométrique 130 vers un premier détecteur 17. Le séparateur source-détecteur 16 peut être fabriqué à partir d'un coupleur à -3dB ou à partir d'un circulateur optique. Le premier circuit optique intégré individuel 13 et la première bobine de fibre optique 18 forment un premier interféromètre 19 en anneau de Sagnac.

Sur le même substrat 2, sont disposés un deuxième circuit optique intégré individuel 23 et un troisième circuit optique intégré individuel 33. De manière analogue, le deuxième circuit optique intégré individuel 23 est relié d'une part à une deuxième fibre optique 21 transmettant le faisceau source divisé 200 et d'autre part aux deux extrémités d'une deuxième bobine de fibre optique 28. Respectivement, le troisième circuit optique intégré individuel 33 est relié d'une part à une troisième fibre optique 31 transmettant le faisceau source divisé 300 et d'autre part aux deux extrémités d'une troisième bobine de fibre optique 38. Le deuxième circuit optique intégré individuel 23 comporte un séparateur de faisceau de manière à séparer le deuxième faisceau lumineux source divisé 200 en un premier faisceau secondaire 210 parcourant la deuxième bobine de fibre optique 28 dans le sens propagatif et un deuxième faisceau secondaire 220 parcourant la deuxième bobine de fibre optique 28 dans le sens contra-propagatif. Les deux faisceaux secondaires 210, 220 se recombinent au niveau du séparateur de faisceau du deuxième COI individuel 23 et forment un faisceau interférométrique 230. Le troisième circuit optique intégré individuel 33 comporte un séparateur de faisceau de manière à séparer le troisième faisceau lumineux source divisé 300 en un premier faisceau secondaire 310 parcourant la troisième bobine de fibre optique 38 dans le sens propagatif et un deuxième faisceau secondaire 320 parcourant la troisième bobine de fibre optique 38 dans le sens contra-propagatif. Les deux faisceaux secondaires 310, 320 se recombinent au niveau du séparateur de faisceau du troisième COI individuel 33 et forment un faisceau interférométrique 330. Un séparateur source-détecteur 26, respectivement 36, dirige le faisceau interférométrique 230, respectivement 330, vers un détecteur 27, respectivement 37. Le deuxième circuit optique intégré individuel 23 et la deuxième bobine de fibre optique 28 forment un deuxième interféromètre 29 en anneau de Sagnac. De même, le troisième circuit optique intégré individuel 33 et la troisième bobine de fibre optique 38 forment un troisième interféromètre 39 en anneau de Sagnac.

Avantageusement, chaque circuit optique intégré individuel 13, respectivement 23, 33 comporte un polariseur intégré 14, 24, 34 de manière à polariser linéairement les faisceaux source divisés se propageant dans les bobines de fibre optique (voir figure 2). De façon préférentielle, la bobine de fibre optique 18, 28, 38 est formée à partir d'une fibre optique à conservation de polarisation dont les axes sont alignés suivant l'axe de polarisation du polariseur de chaque COI individuel 13, respectivement 23, 33. On connaît différentes fibres optiques à conservation de polarisation basées sur l'utilisation de barreaux de contrainte ou encore d'un coeur elliptique. Les fibres optiques à conservation de polarisation sont des fibres biréfringentes.

Comme indiqué précédemment, on souhaite réduire les couplages parasites cohérents entre les différents FOGs reliés à un circuit intégré multiple intégré sur un seul et même substrat 2.

A cet effet, considérons une source lumineuse 10 à spectre large de type "ASE" (source dopée terre rare, par exemple erbium ou diode superluminescente DSL) utilisée dans le dispositif de la figure 3. La figure 4 représente le spectre de puissance lumineuse normalisée P en fonction de la longueur d'onde λ mesuré en sortie de la source lumineuse 10 à spectre large. Ce spectre $P(\lambda)$ apparaît lisse en fonction de la longueur d'onde.

La figure 5 représente la fonction de cohérence C(d) de la source 10 (i.e. la transformée de Fourier du spectre de la figure 4) sur une échelle logarithmique en abscisses et en ordonnées. Sur la Figure 5, la fonction de cohérence C(d) de la source lumineuse 10 à spectre large présente une décroissance continue et devient négligeable au-delà d'une distance d d'un millimètre.

Comme expliqué précédemment, la source utilisée est généralement une source à spectre large, ayant une longueur de cohérence de quelques centaines de microns. Les différences de longueur entre les chemins optiques allant de la source à l'entrée des différents interféromètres, ne sont pas égales en pratique à quelques millimètres près. Une différence de longueur de quelques millimètres suffit a priori pour éliminer la cohérence des couplages parasites entre les différents interféromètres.

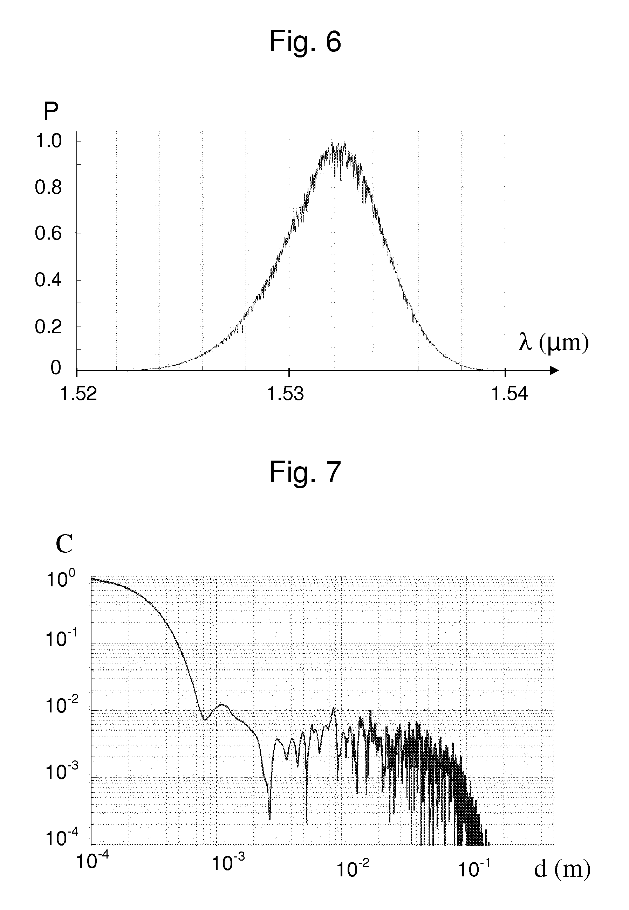

Une considération faisant partie de la présente invention consiste à mesurer le spectre (et la fonction de cohérence associée) de la source en sortie de l'interféromètre à fibre optique et non en entrée. La figure 6 représente le spectre de puissance lumineuse normalisée P en fonction de la longueur d'onde λ mesuré en sortie d'un interféromètre à fibre optique, la lumière arrivant juste avant le détecteur 17. Dans l'exemple représenté, l'interféromètre comporte une bobine de fibre optique 18 ayant une longueur L de 200m, la fibre optique étant biréfringente et ayant une différence d'indice de biréfringence de groupe $\Delta N_b \approx 3.10^{-4}$. Le spectre de la figure 6 est centré sur la même longueur d'onde (~1,53 $\mu$m) que le spectre de la figure 4 et présente sensiblement la même largeur spectrale. Cependant, le spectre de la figure 6 présente des cannelures aléatoires en fonction de la longueur d'onde.

De manière analogue à la figure 5, la figure 7 représente la fonction de cohérence C(d) mesurée en sortie de l'interféromètre (i.e. la transformée de Fourier du spectre de la figure 6). Cette fonction de cohérence C(d) présente une décroissance jusqu'environ $10^{-2}$ et présente typiquement des fluctuations aléatoires entre $10^{-2}$ et $10^{-3}$ qui se poursuivent au-delà d'une distance d de plusieurs centimètres voire plusieurs dizaines de centimètres.

L'analyse de l'invention faite à partir des figures 6 et 7 est la suivante. Une seule polarisation de la source est filtrée en entrée de l'interféromètre et passe dans une bobine de fibre à conservation de polarisation, par exemple la bobine 18. Cependant, la conservation n'est pas parfaite dans la fibre optique biréfringente. En pratique, la propagation s'effectue suivant le mode rapide (même mode que celui transmis par le COI, dans le cas d'un COI à échange protonique sur niobate de lithium). Il y a donc de la lumière couplée dans le mode lent mais celle-ci n'est pas gênante car elle va être éliminée en sortie par le polariseur. Par contre, une partie de cette lumière couplée dans le mode lent peut se recoupler dans le mode rapide. Ce couplage double donne de la lumière retardée qui s'est propagée dans le mode rapide puis dans le mode lent pour revenir dans le mode rapide. Le train d'onde compact de départ, qui avait pour longueur la longueur de cohérence de la source, ressort avec une traînée cohérente, qui correspond à ces couplages doubles retardés, même si le polariseur 14 est parfait.

Les bobines de fibres optiques 18, 28, 38 considérées sont des fibres optiques à conservation de polarisation fonctionnant en régime dit intrinsèque. On rappelle que la différence de temps de groupe de propagation entre les deux modes principaux de polarisation, notée *DGD-I* (differential group delay ou différentiel de temps de groupe) s'accroît linéairement en fonction de la longueur $L_1$ de la bobine de fibre optique en régime intrinsèque :

$$DGD\text{-}I = PMD\text{-}I \times L_1$$

Où le coefficient *PMD-I* est lié à la différence d'indice de biréfringence de groupe $\Delta N_b$ entre les modes orthogonaux et à la vitesse de la lumière dans le vide c :

$$PMD\text{-}I = \Delta N_b / c$$

Plus précisément, le coefficient *PMD-I* représente le coefficient de dispersion des modes de polarisation en régime dit intrinsèque. Le coefficient *PMD-I* est généralement exprimé en ps/km. Comme cela est détaillé dans le document de brevet FR2966926A1, il existe aussi un coefficient *PMD-C* en régime couplé, qui augmente en fonction de la racine carrée de la longueur de la bobine. Dans ce cas de régime couplé, le différentiel de temps de groupe est :

$$DGD\text{-}C = PMD\text{-}C \times \sqrt{L_1}$$

On considère ici essentiellement le mode intrinsèque qui, en pratique, donne un *DGD-I* supérieur au *DGD-C.*

Pour une bobine de fibre optique 18 de longueur $L_1$ égale à 1 km et ayant une différence d'indice de biréfringence de groupe $\Delta N_{b1}$ de $3.10^{-4}$ à $5.10^{-4}$, on trouve un coefficient *PMD-I* compris entre 1 et 1,6 ns/km et une valeur de *DGD-I* accumulée comprise entre 1 et 1,6 ns. Cette valeur de *DGD-I* accumulée correspond à une longueur optique égale à $\Delta N_{b1} \times L_1$ ou de manière équivalente une longueur égale à $c \times PMD\text{-}I \times L_1$, soit environ 50 cm dans le vide pour une bobine de fibre optique ayant longueur $L_1$ de 1 km.

Ceci explique l'apparition des cannelures aléatoires observées sur le spectre de la figure 6. En effet, la fonction de cohérence calculée par transformée de Fourier présente des fluctuations aléatoires, typiquement autour de $10^{-2}$ à $10^{-3}$, et sur une distance correspondant à la longueur équivalente au *DGD-I* (Differential Group Delay) total de la bobine : typiquement une distance équivalente à 1/2000 de sa longueur $L_1$.

On souhaite minimiser la cohérence des recouplages parasites entre les différents interféromètres de Sagnac, pris deux à deux. Le raisonnement s'applique par analogie à un nombre quelconque d'interféromètres. Par exemple, on souhaite minimiser les recouplages parasites cohérents entre un premier interféromètre à fibre optique et un deuxième interféromètre à fibre optique. La première bobine de fibre optique 18 a une longueur $L_1$ et présente une différence d'indice de biréfringence de groupe $\Delta N_{b1}$ qui correspond à un coefficient de dispersion des modes de polarisation égal à $PMO\text{-}I_1$. Respectivement, la deuxième bobine de fibre optique 28 a une longueur $L_2$ et présente une différence d'indice de biréfringence de groupe $\Delta N_{b2}$ qui correspond à un coefficient de dispersion des modes de polarisation égal à $PMD\text{-}I_2$. Préférentiellement, les bobines de fibre optique 18 et 28 comportent des fibres monomodes à conservation de polarisation. La dispersion des modes de polarisation dans la première bobine de fibre optique 18 induit une traînée cohérente sur une longueur égale à $\Delta N_{b1} \times L_1 = c \times PMO\text{-}I_1 \times L_1$. De même, la dispersion des modes de polarisation dans la deuxième bobine de fibre optique 28 induit une traînée cohérente sur une longueur égale à $\Delta N_{b2} \times L_2 = c \times PMD\text{-}I_2 \times L_2$.

Dans un dispositif à plusieurs gyroscopes à fibre optique basé sur l'utilisation d'une seule et même source et d'un COI multiple, des couplages parasites cohérents peuvent se produire entre les signaux provenant du premier interféromètre à fibre optique et du deuxième interféromètre à fibre optique dès que la distance entre ces signaux est inférieure au maximum de $c \times PMO\text{-}I_1 \times L_1$ et $c \times PMD\text{-}I_2 \times L_2$.

La solution proposée consiste à introduire une différence de longueur optique $\Delta \ell$ au niveau du faisceau source entre les entrées respectives des différents interféromètres. On rappelle que la longueur optique $\ell$ est égale au produit de la longueur physique par l'indice de réfraction du matériau (environ 1,45 pour une fibre optique).

Notons, $\ell_1$ la longueur optique des premiers moyens de transmission à fibre optique 11 prise entre la source 10 et l'entrée du premier circuit optique intégré individuel 13 sur le substrat 2, et respectivement $\ell_2$ la longueur optique des deuxièmes moyens de transmission à fibre optique 21 prise entre la source 10 et l'entrée du deuxième circuit optique intégré individuel 23 sur le substrat 2. Pour atténuer la cohérence des phénomènes physiques de recouplage parasites entre le premier et le deuxième interféromètre, la différence $\Delta \ell$ entre la longueur optique $\ell_1$ et la longueur optique $\ell_2$ des deuxièmes moyens de transmission à fibre optique est choisie de manière à être supérieure au maximum de $\Delta N_{b1} \times L_1 = c \times PMO\text{-}I_1 \times L_1$ et $\Delta N_{b2} \times L_2 = c \times PMD\text{-}I_2 \times L_2$.

De préférence, la différence $\Delta \ell$ entre la longueur optique $\ell_1$ des premiers moyens de transmission à fibre optique et la longueur optique $\ell_2$ des deuxièmes moyens de transmission à fibre optique est supérieure à quatre fois le maximum de $\Delta N_{b1} \times L_1$ et $\Delta N_{b2} \times L_2$.

Cette disposition est très facilement mise en oeuvre dans un système à plusieurs interféromètres à fibre optique en anneau de Sagnac, comportant une seule source et un circuit intégré multiple comprenant plusieurs circuits optiques intégrés individuels en parallèle sur un seul et même substrat. Supposons que les bobines de fibres optiques des différents interféromètres sont fabriqués à partir d'un même type de fibre, ayant une différence d'indice de biréfringence de groupe $\Delta N_b$ et ont sensiblement la même longueur $L$, ce qui est le cas pour obtenir une sensibilité de même ordre sur des axes différents d'un système de gyroscopes. Dans ce cas, il suffit de déterminer la différence de longueur optique minimum à respecter entre tous les chemins optiques s'étendant entre le diviseur de faisceau source 30 et l'entrée du circuit optique intégré multiple. Lorsque la différence de longueur optique entre la source et n'importe lesquels des interféromètres, pris deux à deux, est supérieure à la valeur de $\Delta N_b \times L$, les recouplages parasites ne peuvent pas perturber les signaux interférométriques sur un des interféromètres.

Dans un exemple d'application numérique, la première bobine de fibre optique 18 et la deuxième bobine de fibre optique 28 ont la même longueur $L_1 = L_2 = 1km$, le même indice de réfraction $n$ d'environ 1,45 et la même différence d'indice de biréfringence de groupe $\Delta N_{b1} = \Delta N_{b2}$ donc le même coefficient de dispersion des modes de polarisation $PMO\text{-}I_1 = PMD\text{-}I_2 = 1,5$ ns/km. La longueur optique $\ell_1$ de la fibre optique 11 est égale au produit de la longueur physique de la fibre optique 11 par son indice de réfraction n. La différence $\Delta\ell$ entre les longueurs optiques $\ell_1$ et $\ell_2$ doit alors être supérieure à 50 cm dans le vide, ce qui correspond à une différence de longueur physique de fibre optique de 35 cm. Avantageusement, on choisit une différence de longueur physique $\Delta\ell/n$ de 1 à 2 m.

Cette différence $\Delta\ell$ entre les longueurs optiques $\ell_1$ et $\ell_2$ de plusieurs dizaines de cm (voire plus du mètre) est bien supérieure à ce qui est mis en oeuvre dans les systèmes interférométriques de l'art antérieur. Dans les dispositifs antérieurs, on utilise généralement des longueurs pour les différents chemins optiques entre la source et chaque interféromètre différentes de plusieurs millimètres, c'est-à-dire une différence de longueur optique $\Delta\ell$ légèrement supérieure à la longueur de cohérence de la source, généralement de l'ordre de quelques centaines de microns.

Au contraire selon l'invention, le critère de différence de longueur lié à la longueur de cohérence de la source ne suffit pas, il faut une différence de longueur de plus de 1000 fois la longueur de cohérence de la source.

L'homme du métier généralisera sans difficulté le principe de l'invention à un système de trois interféromètres en anneau de Sagnac à fibre optique ayant respectivement une longueur $L_i$ avec i=1, 2, 3 et une différence d'indice de groupe $\Delta N_{bi}$ avec i=1, 2, 3 ou, de manière équivalente, un coefficient de dispersion des modes de polarisation $PMD\text{-}I_i$ avec i=1, 2, 3. On considère la valeur la plus élevée des $\Delta N_{bi}$ x $L_i$ pour i=1, 2, 3. De manière équivalente, on considère la valeur la plus élevée de c x $PMD\text{-}I_i$ x $L_i$ pour i=1, 2, 3. La différence $\Delta\ell$ de longueur optique entre la source lumineuse 10 à spectre large et deux quelconques des interféromètres est déterminée de manière à être supérieure ou égale au maximum de $\Delta N_{bi}$ x $L_i$ pour i=1, 2, 3 (ou au maximum de c x $PMD\text{-}I_i$ x $L_i$ pour i=1, 2, 3).

De préférence, la différence $\Delta\ell$ de longueur optique entre la source lumineuse 10 à spectre large et deux quelconques des interféromètres est supérieure à quatre fois le maximum de $\Delta N_{b1}$ x $L_1$, $\Delta N_{b2}$ x $L_2$ et $\Delta N_{b3}$ x $L_3$.

Les longueurs physiques des fibres optiques 11, 21 et 31 permettent de matérialiser les longueurs optiques des différents chemins optiques entre la source commune 10 et l'entrée du COI multiple. La différence de longueur optique se situe entre le diviseur de faisceau source 30 et les entrées respectives de chaque FOGs sur le COI multiple. Cette différence de longueur entre les fibres optiques 11, 21 et 31 peut être située entre le diviseur de faisceau source 30 et un séparateur source-détecteur 16, 26, respectivement 36 et/ou entre le COI multiple et un séparateur source-détecteur 16, 26, respectivement 36. Sur la figure 3, la différence $\Delta\ell$ entre les longueurs des différentes fibres optiques est représentée schématiquement par une ou plusieurs boucles de fibre optique.

L'invention permet de fabriquer un système interférométrique à fibres optiques en anneau de Sagnac utilisant une seule source et un COI multiple tout en réduisant considérablement les couplages parasites cohérents se produisant entre les signaux de différents interféromètres à fibres optiques.

Le système de l'invention permet donc d'augmenter la compacité d'un système à plusieurs interféromètres via l'utilisation d'un COI multiple intégrant plusieurs COI individuels en parallèle sur un unique substrat, tout en conservant les qualités de biais à long terme de chacun des interféromètres indépendants.

L'invention trouve une application notamment dans les systèmes inertiels de guidage ou de navigation utilisant plusieurs gyroscopes à fibre optique.

## Revendications

1.    Système de mesure interférométrique à fibre optique comportant :

- une source lumineuse (10) à spectre large apte à émettre un faisceau lumineux source (20) ;
- un diviseur de faisceau (30) apte à recevoir le faisceau lumineux source (20) et à former un premier faisceau source divisé (100) et un deuxième faisceau source divisé (200) ;
- des premiers moyens de transmission optique (11) de longueur optique $\ell_1$ aptes à transmettre le premier faisceau source divisé (100) et des deuxièmes moyens de transmission optique (21) de longueur optique $\ell_2$ aptes à transmettre le deuxième faisceau source divisé (200) ;
- un premier interféromètre en anneau de Sagnac comportant une première bobine de fibre optique (18) et un premier circuit optique intégré individuel (13) relié d'une part aux premiers moyens de transmission optique (11) et d'autre part aux deux extrémités de la première bobine de fibre optique (18), la première bobine de fibre optique (18) ayant une longueur $L_1$ et une différence d'indice de biréfringence de groupe $\Delta N_{b1}$ ;
- un premier détecteur (17) apte à détecter un premier signal interférométrique (130) formé par la propagation du premier faisceau source divisé (100) dans le premier interféromètre en anneau de Sagnac ;
- un deuxième interféromètre en anneau de Sagnac comprenant une deuxième bobine de fibre optique (28) et un deuxième circuit optique intégré individuel (23) relié d'une part aux deuxièmes moyens de transmission optique (21) et d'autre part aux deux extrémités de la deuxième bobine de fibre optique (28), la deuxième bobine de fibre optique (28) ayant une longueur $L_2$ et une différence d'indice de biréfringence de groupe $\Delta N_{b2}$ ;
- un deuxième détecteur (27) apte à détecter un deuxième signal interférométrique (230) formé par la propagation du deuxième faisceau source divisé (200) dans le deuxième interféromètre en anneau de Sagnac, et

- un circuit optique intégré multiple intégrant sur un même substrat (2) le premier circuit optique intégré individuel (13) et le deuxième circuit optique intégré individuel (23) **caractérisé en ce que** :

- la différence $\Delta\ell$ entre la longueur optique $\ell_1$ des premiers moyens de transmission optique (11) et la longueur optique $\ell_2$ des deuxièmes moyens de transmission optique (21) est supérieure au maximum de $\Delta N_{b1} \times L_1$ et $\Delta N_{b2} \times L_2$.

2. Système de mesure interférométrique à fibre optique selon la revendication 1 dans lequel la différence $\Delta\ell$ entre la longueur optique $\ell_1$ des premiers moyens de transmission optique (11) et la longueur optique $\ell_2$ des deuxièmes moyens de transmission optique (21) est supérieure à quatre fois la valeur du maximum de $\Delta N_{b1} \times L_1$ et de $\Delta N_{b2} \times L_2$.

3. Système de mesure interférométrique à fibre optique selon la revendication 1 ou la revendication 2 dans lequel les premiers moyens de transmission optique (11) comportent une fibre optique et/ou les deuxièmes moyens de transmission optique (21) comportent une fibre optique.

4. Système de mesure interférométrique à fibre optique selon l'une des revendications 1 à 3, dans lequel la première, respectivement la deuxième bobine de fibre optique (18, 28) comporte une fibre optique à maintien de polarisation ayant une différence d'indice de biréfringence de groupe $\Delta N_{b1}$ respectivement $\Delta N_{b2}$, comprise entre $10^{-4}$ et $10^{-3}$ et dans lequel la différence $\Delta\ell$ entre la longueur optique $\ell_1$ des premiers moyens de transmission à fibre optique et la longueur optique $\ell_2$ des deuxièmes moyens de transmission à fibre optique est comprise entre $10^{-4}$ et $10^{-3}$ multiplié par le maximum de $L_1$ et $L_2$.

5. Système de mesure interférométrique à fibre optique selon l'une des revendications 1 à 4 comportant en outre un premier, respectivement un deuxième, séparateur source-détecteur (16, 26) disposé entre le diviseur de faisceau (30) et le circuit intégré multiple, dans lequel la différence $\Delta\ell$ entre la longueur optique $\ell_1$ des premiers moyens de transmission optique (11) et la longueur optique $\ell_2$ des deuxièmes moyens de transmission optique (21) est située entre le diviseur de faisceau (30) et les premier et deuxième séparateurs source-détecteur (16, 26).

6. Système de mesure interférométrique à fibre optique selon l'une des revendications 1 à 4 comportant en outre un premier, respectivement un deuxième, séparateur source-détecteur (16, 26) disposé entre le diviseur de faisceau (30) et le circuit intégré multiple, dans lequel la différence $\Delta\ell$ entre la longueur optique $\ell_1$ des premiers moyens de transmission optique (11) et la longueur optique $\ell_2$ des deuxièmes moyens de transmission optique (21) est située entre le circuit intégré multiple et les premier et deuxième séparateurs source-détecteur (16, 26).

7. Système de mesure interférométrique à fibre optique selon l'une des revendications précédentes comportant en outre des troisièmes moyens de transmission optique (31) de longueur optique $\ell_3$ aptes à transmettre un troisième faisceau source divisé (300), un troisième interféromètre en anneau de Sagnac comportant une troisième bobine de fibre optique (38) et un troisième circuit optique intégré individuel (33) relié d'une part aux troisièmes moyens de transmission optique (31) et d'autre part aux deux extrémités de la troisième bobine de fibre optique (38), la troisième bobine de fibre optique (38) ayant une longueur $L_3$ et une différence d'indice de biréfringence de groupe $\Delta N_{b3}$, dans lequel le circuit optique intégré multiple intègre sur le même substrat (2) le premier circuit optique intégré individuel (13), le deuxième circuit optique intégré individuel (23) et le troisième circuit optique intégré individuel (33) et dans lequel la différence de longueur optique entre deux quelconques des premiers, deuxièmes et troisièmes moyens de transmission optique (11, 21, 31) est supérieure au maximum de $\Delta N_{b1} \times L_1$, $\Delta N_{b2} \times L_2$ et $\Delta N_{b3} \times L_3$.

8. Système de mesure interférométrique à fibre optique selon la revendication 7 dans lequel la différence de longueur optique entre deux quelconques des premiers, deuxièmes et troisièmes moyens de transmission optique (11, 21, 31) est supérieure à quatre fois la valeur du maximum de $\Delta N_{b1} \times L_1$, $\Delta N_{b2} \times L_2$ et $\Delta N_{b3} \times L_3$.

9. Système de mesure interférométrique à fibre optique selon l'une des revendications précédentes dans lequel la source lumineuse (10) à spectre large est choisie parmi une diode super luminescente et une source à fibre dopée terre rare.

10. Système de mesure gyroscopique comportant un système de mesure interférométrique à fibre optique selon l'une des revendications 1 à 9.

11. Système inertiel de guidage ou de navigation comprenant un système de mesure interférométrique à fibre optique selon l'une des revendications 1 à 9.

**Patentansprüche**

1. Interferometrisches Meßsystem mit optischer Faser mit:

   - einer Lichtquelle (10) mit breitem Spektrum, geeignet, einen Quellenlichtstrahl (20) auszusenden,
   - einem Strahlenteiler (30), geeignet, den Quellenlichtstrahl (20) zu empfangen und einen ersten geteilten Quellenstrahl (100) und einen zweiten geteilten Quellenstrahl (200) zu bilden,
   - ersten optischen Übertragungsmitteln (11) der optischen Länge $l_1$, geeignet, den ersten geteilten Quellenstrahl (100) zu übertragen, und zweiten optischen Übertragungsmitteln (21) der optischen Länge $l_2$, geeignet, den zweiten geteilten Quellenstrahl (200) zu übertragen,
   - einem ersten Sagnac-Ringinterferometer mit einer ersten Spule aus einer optischen Faser (18) und einem ersten individuellen integrierten optischen Schaltkreis (13), der einerseits mit den ersten optischen Übertragungsmitteln (11) und andererseits mit den beiden Enden der ersten Spule aus einer optischen Faser (18) verbunden ist, wobei die erste Spule aus einer optischen Faser (18) eine Länge $L_1$ und eine Gruppendoppelbrechungsindexdifferenz $\Delta N_{b1}$ aufweist,
   - einem ersten Detektor (17), geeignet, ein erstes interferometrisches, durch die Ausbreitung des ersten geteilten Quellenstrahls (100) im ersten Sagnac-Ringinterferometer gebildetes Signal (130) zu erfassen,
   - einem zweiten Sagnac-Ringinterferometer mit einer zweiten Spule aus einer optischen Faser (28) und einem zweiten individuellen integrierten optischen Schaltkreis (23), der einerseits mit den zweiten optischen Übertragungsmitteln (21) und andererseits mit den beiden Enden der zweiten Spule aus einer optischen Faser (28) verbunden ist, wobei die zweite Spule aus einer optischen Faser (28) eine Länge $L_2$ und eine Gruppendoppelbrechungsindexdifferenz $\Delta N_{b2}$ aufweist,
   - einem zweiten Detektor (27), geeignet, ein zweites interferometrisches, durch die Ausbreitung des zweiten geteilten Quellenstrahls (200) im zweiten Sagnac-Ringinterferometer gebildetes Signal (230) zu erfassen, und
   - einem mehrfachen integrierten optischen Schaltkreis, der auf einem selben Substrat (2) den ersten individuellen integrierten optischen Schaltkreis (13) und den zweiten individuellen integrierten optischen Schaltkreis (23) integriert,

   **dadurch gekennzeichnet, daß**

   - die Differenz $\Delta l$ zwischen der optischen Länge $l_1$ der ersten optischen Übertragungsmittel (11) und der optischen Länge $l_2$ der zweiten optischen Übertragungsmittel (21) größer als das Maximum von $\Delta N_{b1}$ x $L_1$ und $\Delta N_{b2}$ x $L_2$ ist.

2. Interferometrisches Meßsystem mit optischer Faser gemäß Anspruch 1, bei dem die Differenz $\Delta l$ zwischen der optischen Länge $l_1$ der ersten optischen Übertragungsmittel (11) und der optischen Länge $l_2$ der zweiten optischen Übertragungsmittel (21) größer als das Vierfache des Wertes des Maximums von $\Delta N_{b1}$ x $L_1$ und von $\Delta N_{b2}$ x $L_2$ ist.

3. Interferometrisches Meßsystem mit optischer Faser gemäß Anspruch 1 oder Anspruch 2, bei dem die ersten optischen Übertragungsmittel (11) eine optische Faser aufweisen und/oder die zweiten optischen Übertragungsmittel (21) eine optische Faser aufweisen.

4. Interferometrisches Meßsystem mit optischer Faser gemäß einem der Ansprüche 1 bis 3, bei dem die erste bzw. die zweite Spule aus einer optischen Faser (18, 28) eine optische Faser mit Polarisationserhalt mit einer Gruppendoppelbrechungsindexdifferenz $\Delta N_{b1}$ bzw. $\Delta N_{b2}$ zwischen $10^{-4}$ und $10^{-3}$ aufweist und bei dem die Differenz $\Delta l$ zwischen der optischen Länge $l_1$ der ersten optischen Übertragungsmittel mit optischer Faser und der optischen Läge $l_2$ der zweiten optischen Übertragungsmittel mit optischer Faser zwischen $10^{-4}$ und $10^{-3}$ multipliziert mit dem Maximum von $L_1$ und $L_2$ ist.

5. Interferometrisches Meßsystem mit optischer Faser gemäß einem der Ansprüche 1 bis 4, das außerdem einen ersten bzw. einen zweiten, zwischen dem Strahlteiler (30) und dem mehrfachen integrierten Schaltkreis angeordneten Separator Quelle/Detektor (16, 26) aufweist, bei dem die Differenz $\Delta l$ zwischen der optischen Länge $l_1$ der ersten optischen Übertragungsmittel (11) und der optischen Länge $l_2$ der zweiten optischen Übertragungsmittel (21) zwischen dem Strahlteiler (30) und dem ersten und dem zweiten Separator Quelle/Detektor (16, 26) liegt.

6. Interferometrisches Meßsystem mit optischer Faser gemäß einem der Ansprüche 1 bis 4, das außerdem einen ersten bzw. einen zweiten, zwischen dem Strahlteiler (30) und dem mehrfachen integrierten Schaltkreis angeordneten Separator Quelle/Detektor (16, 26) aufweist, bei dem die Differenz $\Delta l$ zwischen der optischen Länge $l_1$ der ersten optischen Übertragungsmittel (11) und der optischen Länge $l_2$ der zweiten optischen Übertragungsmittel (21) zwischen dem mehrfachen integrierten Schaltkreis und dem ersten und dem zweiten Separator Quelle/Detektor (16, 26) liegt.

**7.** Interferometrisches Meßsystem mit optischer Faser gemäß einem der vorangehenden Ansprüche, das außerdem dritte optische Übertragungsmittel (31) der optischen Länge $l_3$, geeignet, einen dritten geteilten Quellenstrahl (300) zu übertragen, und ein drittes Sagnac-Ringinterferometer mit einer dritten Spule aus einer optischen Faser (38) und einen dritten individuellen integrierten optischen Schaltkreis (33) aufweist, der einerseits mit den dritten optischen Übertragungsmitteln (31) und andererseits mit den beiden Enden der dritten Spule aus einer optischen Faser (38) verbunden ist, wobei die dritte Spule aus einer optischen Faser (38) eine Länge $L_3$ und eine Gruppendoppelbrechungsindexdifferenz $\Delta N_{b3}$ aufweist,
bei dem der mehrfache integrierte optische Schaltkreis auf demselben Substrat (2) den ersten individuellen integrierten optischen Schaltkreis (13), den zweiten individuellen integrierten optischen Schaltkreis (23) und den dritten individuellen integrierten optischen Schaltkreis (33) integriert und bei dem die Differenz der optischen Längen zwischen irgendwelchen zwei der ersten, zweiten und dritten optischen Übertragungsmittel (11, 21, 31) größer als das Maximum von $\Delta N_{b1}$ x $L_1$, $\Delta N_{b2}$ x $L_2$ und $dN_{b3}$ x $L_3$ ist.

**8.** Interferometrisches Meßsystem mit optischer Faser gemäß Anspruch 7, bei dem die Differenz der optischen Längen zwischen irgendwelchen zwei der ersten, zweiten und dritten optischen Übertragungsmittel (11, 21, 31) größer als das Vierfache des Wertes des Maximums von $\Delta N_{b1}$ x $L_1$, $\Delta N_{b2}$ x $L_2$ und $\Delta N_{b3}$ x $L_3$ ist.

**9.** Interferometrisches Meßsystem mit optischer Faser gemäß einem der vorangehenden Ansprüche, bei dem die Lichtquelle (10) mit breitem Spektrum aus einer Superleuchtdiode und einer Quelle mit mit Seltenen Erden dotierten Faser ausgewählt ist.

**10.** Gyroskopisches Meßsystem, das ein interferometrisches Meßsystem mit optischer Faser gemäß einem der Ansprüche 1 bis 9 aufweist.

**11.** Inertialführungs- oder Navigationssystem mit einem interferometrischen Meßsystem mit optischer Faser gemäß einem der Ansprüche 1 bis 9.

**Claims**

**1.** A fiber-optic interferometric measurement system including:

- a broad-spectrum light source (10) adapted to emit a source light beam (20);
- a beam splitter (30) adapted to receive the source light beam (20) and to form a first split source beam (100) and a second split source beam (200);
- first optical transmission means (11) of optical length $\ell_1$ adapted to transmit the first split source beam (100) and second optical transmission means (21) of optical length $\ell_2$ adapted to transmit the second split source beam (200);
- a first Sagnac ring interferometer including a first fiber-optic coil (18) and a first individual integrated optical circuit (13) connected on the one hand to the first optical transmission means (11) and on the other hand to the two ends of the first fiber-optic coil (18), the first fiber-optic coil (18) having a length $L_1$ and a group birefringence index difference $\Delta N_{b1}$ ;
- a first detector (17) adapted to detect a first interferometric signal (130) formed by the propagation of the first split source beam (100) in the first Sagnac ring interferometer;
- a second Sagnac ring interferometer comprising a second fiber-optic coil (28) and a second individual integrated optical circuit (23) connected on the one hand to the second optical transmission means (21) and on the other hand to the two ends of the second fiber-optic coil (28), the second fiber-optic coil (28) having a length $L_2$ and a group birefringence index difference $\Delta N_{b2}$;
- a second detector (27) adapted to detect a second interferometric signal (230) formed by the propagation of the second split source beam (200) in the second Sagnac ring interferometer; and
- a multiple integrated optical circuit integrating on a same substrate (2) the first individual integrated optical circuit (13) and the second individual integrated optical circuit (23),

**characterized in that**:

- the difference $\Delta\ell$ between the optical length $\ell_1$ of the first optical transmission means (11) and the optical length $\ell_2$ of the second optical transmission means (21) is higher than the maximum of $\Delta N_{b1}$ x $L_1$ and $\Delta N_{b2}$ x $L_2$.

**2.** The fiber-optic interferometric measurement system according to claim 1, wherein the difference $\Delta\ell$ between the optical length $\ell_1$ of the first optical transmission means (11) and the optical length $\ell_2$ of the second optical transmission means (21) is higher than four times the value of the maximum of $\Delta N_{b1}$ x $L_1$ and $\Delta N_{b2}$ x $L_2$.

**3.** The fiber-optic interferometric measurement system according to claim 1 or claim 2, wherein the first optical transmission means (11) include an optical fiber and/or the second optical transmission means (21) include an optical fiber.

4. The fiber-optic interferometric measurement system according to anyone of claims 1 to 3, wherein the first, respectively the second, fiber-optic coil (18, 28) includes a polarisation-maintaining optical fiber having a group birefringence index difference $\Delta N_{b1}$ respectively $\Delta N_{b2}$, comprised between $10^{-4}$ and $10^{-3}$, and wherein the difference $\Delta\ell$ between the optical length $\ell_1$ of the first fiber-optic transmission means and the optical length $\ell_2$ of the second fiber-optic transmission means is comprised between $10^{-4}$ and $10^{-3}$ multiplied by the maximum of $L_1$ and $L_2$.

5. The fiber-optic interferometric measurement system according to one of claims 1 to 4, further including a first, respectively a second, source-detector separator (16, 26) arranged between the beam splitter (30) and the multiple integrated circuit, wherein the difference $\Delta\ell$ between the optical length $\ell_1$ of the first optical transmission means (11) and the optical length $\ell_2$ of the second optical transmission means (21) is located between the beam splitter (30) and the first and second source-detector separators (16, 26).

6. The fiber-optic interferometric measurement system according to one of claims 1 to 4, further including a first, respectively a second, source-detector separator (16, 26) arranged between the beam splitter (30) and the multiple integrated circuit, wherein the difference $\Delta\ell$ between the optical length $\ell_1$ of the first optical transmission means (11) and the optical length $\ell_2$ of the second optical transmission means (21) is located between the multiple integrated circuit and the first and second source-detector separators (16, 26).

7. The fiber-optic interferometric measurement system according to one of the preceding claims, further including third optical transmission means (31) of optical length $\ell_3$ adapted to transmit a third split source beam (300), a third Sagnac ring interferometer including a third fiber-optic coil (38) and a third individual integrated optical circuit (33) connected on the one hand to the third optical transmission means (31) and on the other hand to the two ends of the third fiber-optic coil (38), the third fiber-optic coil (38) having a length $L_3$ and a group birefringence index difference $\Delta N_{b3}$, wherein the multiple integrated optical circuit integrates on the same substrate (2) the first individual integrated optical circuit (13), the second individual integrated optical circuit (23) and the third individual integrated optical circuit (33) and wherein the difference of optical length between any two of the first, second and third optical transmission means (11, 21, 31) is higher than the maximum of $\Delta N_{b1}$ x $L_1$, $\Delta N_{b2}$ x $L_2$ and $\Delta N_{b3}$ x $L_3$.

8. The fiber-optic interferometric measurement system according to claim 7, wherein the optical length difference between any two of the first, second and third optical transmission means (11, 21, 31) is higher than four times the value of the maximum of $\Delta N_{b1}$ x $L_1$, $\Delta N_{b2}$ x $L_2$ and $\Delta N_{b3}$ x $L_3$.

9. The fiber-optic interferometric measurement system according to one of the preceding claims, wherein the broad-spectrum light source (10) is chosen among a superluminescent diode and a rare-earth doped fiber source.

10. A gyroscopic measurement system including a fiber-optic interferometric measurement system according to one of the claims 1 to 9.

11. An inertial guidance or navigation system comprising a fiber-optic interferometric measurement system according to one of the claims 1 to 9.

Art antérieur          Fig. 1

Fig. 2

# Fig. 3

# Fig. 4

# Fig. 5

## Fig. 6

## Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5321779 A
- US 5157461 A
- FR 2966926 A1

**Littérature non-brevet citée dans la description**

- **H.C. LEFÈVRE ; J.P. BETTINI ; S. VATOUX ; M. PAPUCHON.** Progress in optical fiber gyroscopes using integrated optics. *Agard/Nato Conférence on Guided Optical Structures in the Military Environment, AGARD CPP-383, 9A/1-13,* 1985